# FASCICULE DE BREVET EUROPEEN

(11) **EP 3 390 229 B1**
(45) Date de publication et mention de la délivrance du brevet: **20.11.2019**
(21) Numéro de dépôt: 16825468.8
(22) Date de dépôt: 09.12.2016
(51) Int. Cl.: B64D 33/04, F02K 1/76

(54) **SYSTÈME DE COMMANDE HYDRAULIQUE D'UN INVERSEUR DE POUSSÉE COMPRENANT UN MODULE DE CONCENTRATION DES DONNÉES**
HYDRAULIKSTEUERUNGSSYSTEM FÜR EINEN SCHUBUMKEHRER MIT DATENKONZENTRATORMODUL
HYDRAULIC CONTROL SYSTEM FOR A THRUST REVERSER COMPRISING A DATA CONCENTRATOR MODULE

(30) Priorité: 14.12.2015 FR 1562308
(43) Date de publication de la demande: 24.10.2018
(73) Titulaire: Safran Nacelles, 76700 Gonfreville-l'Orcher (FR)
(72) Inventeur: LE COQ, Vincent Pierre Germain, 76700 Gonfreville L'Orcher (FR)
(74) Mandataire: Delorme, Nicolas
(86) Numéro de dépôt international: PCT/FR2016/053302
(87) Numéro de publication internationale: WO 2017/103389

(56) Documents cités:
- EP-A1- 0 843 089
- US-A1- 2015 090 810
- US-B2- 7 370 468

## Description

La présente invention concerne un système de commande hydraulique d'un inverseur de poussée pour une nacelle d'aéronef recevant un turboréacteur, ainsi qu'une nacelle d'aéronef comportant un tel système de commande hydraulique.

Les motorisations des aéronefs sont généralement intégrées dans une nacelle formant une enveloppe extérieure globalement circulaire, comprenant à l'intérieur le turboréacteur disposé suivant l'axe longitudinal de cette nacelle.

Le turboréacteur reçoit de l'air frais venant du côté avant, et rejette du côté arrière les gaz chauds issus de la combustion du carburant, qui donnent une certaine poussée. Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire radialement vers l'extérieur, en le dirigeant vers l'avant afin de générer une poussée inversée de freinage de l'aéronef.

Les inverseurs de poussée peuvent être en particulier à portes ou à grilles effectuant l'inversion du flux d'air froid. A l'origine ils étaient équipés de vérins hydrauliques commandés par des distributeurs pour actionner ces portes ou ces grilles.

D'une manière générale les aéronefs comportent un calculateur électronique à pleine autorité assurant le fonctionnement d'une motorisation, ou un calculateur électronique de l'avionique, qui pilote aussi le système d'inverseur de poussée, comme par exemple dans le document US2015090810.

Pour remplacer le circuit hydraulique de commande de l'inverseur de poussée, un type de commande connu, présenté notamment par le document EP-A1-0843089, comporte des vérins électriques comprenant un moteur électrique entraînant en rotation par un réducteur une vis recevant un écrou, ainsi que des verrous électriques de blocage et des capteurs électriques qui sont reliés à un boîtier électronique de commande échangeant des informations avec le calculateur électronique à pleine autorité.

En particulier le boîtier électronique de commande peut être intégré dans le calculateur électronique à pleine autorité.

Toutefois pour les inverseurs de poussée à commande hydraulique, ces systèmes sont toujours pilotés uniquement par le calculateur à pleine autorité de contrôle de la motorisation ou le calculateur de l'avionique, ce qui entraîne un certain nombre de problèmes.

Le système de commande hydraulique de l'inverseur de poussée comporte notamment des vérins hydrauliques, des verrous hydrauliques de blocage de positions, ainsi que des électrovannes de commande de ces éléments, et des capteurs. Ces équipements sont différents suivant la technologie d'inverseur utilisée, qui peut être notamment à grilles ou à volets.

Le calculateur de pilotage a pour fonction de surveiller les différents états des composants actifs, et de délivrer une logique de commande de ces composants.

Cependant le calculateur à pleine autorité est un ensemble complexe réalisant de nombreuses fonctions importantes pour le fonctionnement de la motorisation ou de l'aéronef, qui est fortement sécurisé, son développement ainsi que ses évolutions sont longues et délicates à réaliser. En particulier il est difficile de l'adapter à des technologies d'inverseur de poussée variées, qui nécessitent des logiques de commande très différentes.

Le contrôle et le fonctionnement du système de commande hydraulique doit tenir compte des contraintes d'interfaces du calculateur à pleine autorité ou du calculateur de l'avionique, comprenant notamment un nombre de voies d'interface qui peut être limité, ou un type de voie défini qui peut être discret ou analogique. C'est contraintes peuvent réduire les capacités de diagnostic et la finesse des logiques de contrôle, ce qui limite la disponibilité opérationnelle du système de commande hydraulique.

En particulier certains avions comme des avions régionaux d'affaires comportent un calculateur à pleine autorité présentant un seul canal pour ce type de commande, et une surveillance ou « monitoring » qui se fait par un canal multiplexé.

De plus la logique de fonctionnement du système de commande hydraulique étant intégrée dans le calculateur à pleine autorité, cette logique devient complexe à mettre en œuvre, ce qui complique son cycle de développement, ainsi que les interventions en cas de modification à apporter.

Par ailleurs l'éloignement entre le calculateur à pleine autorité ou le calculateur d'avionique, et le système de commande hydraulique complique le traitement des compatibilités électromagnétiques « CEM ».

La présente invention a notamment pour but d'éviter ces inconvénients de la technique antérieure.

Elle propose à cet effet un système de commande hydraulique d'un inverseur de poussée d'une nacelle de turboréacteur à double flux pour un aéronef selon la revendication 1, comprenant des dispositifs d'actionnement et de contrôle de l'inverseur comportant des vérins et des verrous hydrauliques, leurs électrovannes d'alimentation hydraulique, et des capteurs, le turboréacteur comportant un calculateur électronique à pleine autorité ou l'aéronef comportant un calculateur d'avionique qui donne des ordres d'inversion de poussée, ce système étant remarquable en ce qu'il comporte un module électronique de concentration distinct du calculateur, réalisant une concentration de l'ensemble des données relatives au fonctionnement des dispositifs d'actionnement et de contrôle de l'inverseur, ce module comprenant des contacteurs internes de commande des électrovannes, des moyens de surveillance des capteurs, un moyen de traitement analogique ou numérique de ces données réalisant notamment le séquencement des moyens d'actionnement, et un bus de communication vers le calculateur, et en ce que certains contacteurs internes pilotés par le moyen de traitement des données, commandent leurs électrovannes de manière partagée avec le calculateur, avec d'abord en amont une commande par le calculateur, et ensuite en aval une commande par le moyen de traitement des données.

Un avantage de ce système de commande hydraulique est que son module électronique de concentration peut être rapproché des dispositifs d'actionnement et de contrôle, ce qui simplifie les communications vers ces dispositifs, et limite notamment les problèmes de compatibilité électromagnétique. En particulier les contacteurs internes de commande des électrovannes permettent de réaliser de manière rapprochée le contrôle de ces électrovannes avec un niveau élevé de sécurité.

Par ailleurs le moyen de traitement analogique ou numérique des données du module de concentration permet de décharger de certaines fonctions le calculateur, ce qui simplifie le développement de ces fonctions qui peuvent se faire de manière indépendante du calculateur.

Le système de commande hydraulique selon l'invention peut comporter de plus une ou plusieurs des caractéristiques suivantes, qui peuvent être combinées entre elles.

Avantageusement, le module de concentration comporte deux canaux similaires disposés en parallèle, prévus pour être reliés chacun à deux canaux similaires du calculateur. On obtient ainsi avec ces deux canaux une redondance de toutes les fonctions.

Avantageusement, certains contacteurs internes pilotés par le moyen de traitement des données, commandent leurs électrovannes de manière partagée avec le calculateur. On obtient par ce double pilotage à la fois du module de concentration et du calculateur, une sécurité élevée pour cette commande.

En particulier, la commande partagée des électrovannes peut comprendre d'abord en amont une commande par le calculateur, et ensuite en aval une commande par le moyen de traitement des données.

Dans ce cas, les électrovannes peuvent comporter un bobinage relié d'un côté au contacteur interne, et de l'autre côté à un contacteur externe au module de concentration.

Avantageusement, le module de concentration comporte des contacteurs internes commandant de manière indépendante certaine électrovannes uniquement par le moyen de traitement des données. On obtient ainsi une indépendance du module de concentration pour réaliser des manœuvres.

Avantageusement, le module de concentration comporte en parallèle du bus de communication, une carte permettant d'échanger des informations analogiques avec le calculateur à pleine autorité.

Avantageusement, le module de concentration comporte des moyens de surveillance de signaux venant de capteurs qui ne sont pas directement liés au fonctionnement de l'inverseur de poussée. On peut ainsi ajouter des nouvelles fonctions complémentaires aux fonctions de commande de l'inverseur de poussée.

En particulier ces moyens de surveillance peuvent recevoir des signaux de température, de positionnement d'éléments de la nacelle, ou de contraintes de la structure de la nacelle.

L'invention a aussi pour objet une nacelle de turboréacteur pour la motorisation d'un aéronef, comportant un inverseur de poussée équipé d'un système de commande hydraulique comprenant l'une quelconque des caractéristiques précédentes.

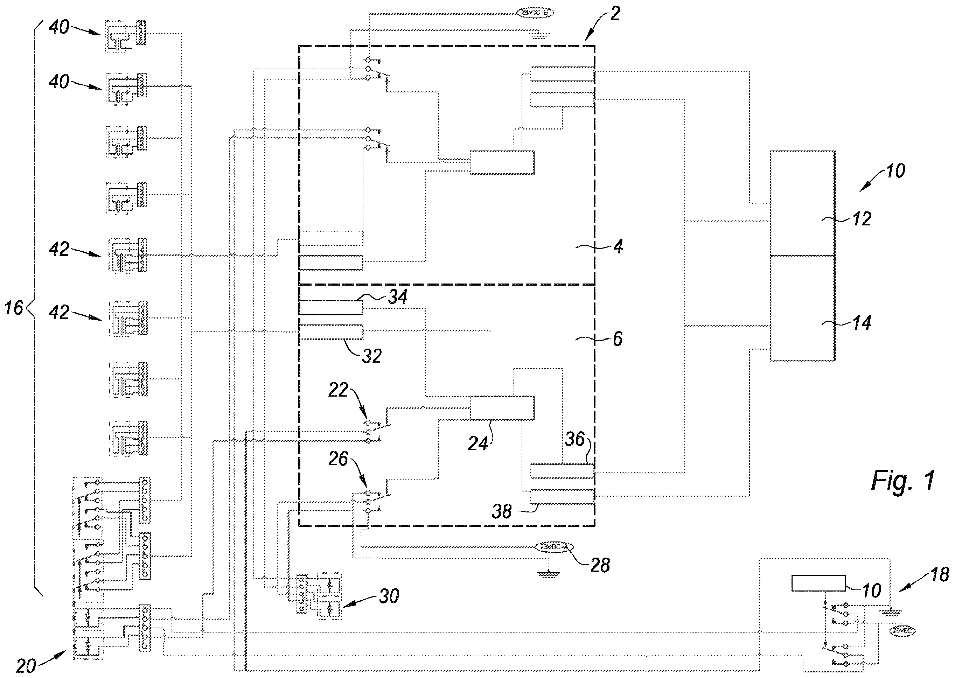

L'invention sera mieux comprise et d'autres caractéristiques et avantages apparaîtront plus clairement à la lecture de la description ci-après donnée à titre d'exemple, en référence au dessin annexé de la figure 1 qui est un schéma général du module électronique de concentration pour un système de commande hydraulique selon l'invention.

La figure 1 présente un module électronique de concentration 2 propre à un inverseur de poussée à commande hydraulique, comprenant deux parties symétriques formant respectivement un premier canal 4 et un deuxième canal 6 réalisant de manière indépendante des fonctions similaires afin d'assurer la sécurité par une redondance. On peut utiliser alternativement le premier 4 ou le deuxième canal 6, en cas de défaillance de l'autre canal.

La motorisation de l'aéronef comporte un calculateur électronique à pleine autorité 10, appelé aussi « FADEC » (abréviation des termes anglais : « Full Authority Digital Engine Control »), comprenant de la même manière un premier canal 12 et un deuxième canal 14 pouvant travailler indépendamment pour assurer une redondance. Chaque canal 12, 14 est relié à la fois aux deux canaux 4, 6 du module électronique de concentration 2, pour pouvoir échanger avec l'un ou l'autre.

Le calculateur électronique à pleine autorité 10 est un système d'interface entre le cockpit de l'aéronef et le turboréacteur, permettant d'assurer le fonctionnement de cette machine.

Le module de concentration 2 comporte différents systèmes sécurisés d'alimentation en courant électrique. Ce module 2 est relié à l'ensemble des dispositifs d'actionnement de l'inverseur de poussée, comportant des vérins hydrauliques et des verrous hydrauliques non représentés sur cette figure, et des électrovannes 20, 30 d'alimentation de ces composants.

Le module de concentration 2 est aussi relié à l'ensemble des capteurs 16 relatifs au fonctionnement de l'inverseur de poussée, afin de recevoir des informations sur l'état de cet inverseur.

Le module de concentration 2 comporte une logique déportée analogique ou numérique réalisant une synthèse de l'ensemble des données relatives au fonctionnement de l'inverseur de poussée, pour commander cet inverseur en réponse au pilotage demandé par le calculateur à pleine autorité 10.

En retour le module de concentration 2 informe le calculateur à pleine autorité 10 de l'état de l'inverseur de poussée, ainsi que des différentes pannes qui pourraient apparaître.

En plus du calculateur à pleine autorité 10 et afin d'obtenir une ségrégation supplémentaire de la commande d'inverseur pour assurer la sécurité, il est fait généralement recours à la commande partagée d'au moins une électrovanne hydraulique 20 de commande d'actionneurs hydrauliques de l'inverseur, par un calculateur de commande avionique qui est en liaison avec la commande de manette des gaz du cockpit engagée en position d'inversion de poussée.

Ainsi pour chaque canal 4, 6 du module de concentration 2, le calculateur de commande avionique ferme un contacteur 18 extérieur à ce module de concentration, qui délivre une tension électrique continue vers un pôle d'une bobine de l'électrovanne 20, tandis que le module de concentration ferme dans une logique de séquencement élaborée par un automate programmable 24 interne, l'alimentation de cette bobine 20 en mettant à la masse son deuxième pôle par un premier contacteur interne 22.

De cette manière on obtient une première alimentation de chaque électrovanne 20, avec une commande partagée comprenant d'abord en amont une commande par le calculateur de commande avionique par le biais du contacteur extérieur 18, et ensuite en aval par le module de concentration 2.

Pour chaque canal, une alimentation électrique autonome 28 est reliée à un deuxième contacteur interne 26 commandé par l'automate programmable 24, pour alimenter un pôle d'une bobine d'un deuxième relais extérieur d'une électrovanne 30 de commande d'actionneurs hydrauliques de l'inverseur. L'autre extrémité de la bobine reste reliée à la masse en permanence.

De cette manière on obtient une deuxième alimentation des électrovannes 30, avec une commande interne dépendant uniquement du module de concentration 2.

Pour chaque canal, le module de concentration 2 comporte un premier moyen de surveillance 32 recevant les signaux venant de différents capteurs de proximité 40 et capteurs de position linéaire 42, qui permettent de suivre en permanence l'état de différents éléments mobiles de l'inverseur de poussée, et un deuxième moyen de surveillance 34 recevant d'autres signaux venant de la nacelle à surveiller, comme par exemple la température d'une zone particulière, un état de positionnement de capots de maintenance, ou un état de contraintes de la structure de la nacelle.

Pour chaque canal, l'automate programmable 24 est relié par un bus de communication 36 à chacune des voie 12, 14 du calculateur à pleine autorité 10, afin de recevoir les ordres pour la commande de l'inverseur de poussée, et de lui transmettre en retour des informations sur l'état de cet inverseur.

En parallèle de ce bus de communication 36, chaque canal comporte une carte 38 permettant d'échanger des informations analogiques avec chacune des voies 12, 14 du calculateur à pleine autorité 10.

Par ces moyens on peut en particulier informer le calculateur à pleine autorité 10 de pannes ou défaillances de l'inverseur de poussée.

Avantageusement on utilise un bus de communication 36 universel acceptant différents protocoles d'échange venant du calculateur à pleine autorité 10, afin de réaliser un standard pour l'inverseur de poussée permettant de s'adapter facilement à plusieurs constructeurs de motorisation ou d'aéronef, ce qui permet de limiter les coûts.

D'une manière générale le module de concentration 2 permet de réaliser des fonctions complexes relatives à l'inverseur de poussée, sans charger le calculateur à pleine autorité 10, comme par exemple une optimisation du contrôle et de la surveillance de cet inverseur, ce qui augmente sa disponibilité opérationnelle.

Le module de concentration 2 peut en particulier à partir d'un simple ordre de commande générale de l'inverseur de poussée, commander et surveiller des séquences complexes de manœuvre des différents actionneurs de cet inverseur.

Le module de concentration 2 permet aussi d'effectuer facilement des modifications du contrôle de l'inverseur de poussée, ou de s'adapter à différents types d'inverseur, comme par exemple des systèmes à grilles ou à volets, sans effectuer de modifications importantes du calculateur à pleine autorité 10 qui sont généralement difficiles à réaliser.

On s'affranchit ainsi d'un grand nombre de contraintes d'un calculateur à pleine autorité 10 existant, comme par exemple un nombre de voie réduit, ce qui est le cas des calculateurs à un seul canal.

On peut aussi plus facilement ajouter des nouvelles fonctions prises en charge par le module de concentration 2 , comme par exemple la mesure de températures à surveiller dans une zone particulière de la nacelle, un état de position de capots de maintenance ou un état de contraintes.

## Revendications

1. Système de commande hydraulique d'un inverseur de poussée d'une nacelle de turboréacteur à double flux pour un aéronef, comprenant des dispositifs d'actionnement et de contrôle de l'inverseur comportant des vérins et des verrous hydrauliques, leurs électrovannes (20, 30) d'alimentation hydraulique, et des capteurs (16), le turboréacteur comportant un calculateur électronique à pleine autorité (10) ou l'aéronef comportant un calculateur d'avionique qui donne des ordres d'inversion de poussée, le système comportant un module électronique de concentration (2) distinct du calculateur (10), réalisant une concentration de l'ensemble des données relatives au fonctionnement des dispositifs d'actionnement et de contrôle de l'inverseur, ce module comprenant des contacteurs internes (22, 26) de commande des électrovannes (20, 30), des moyens de surveillance (32) des capteurs (16), un moyen de traitement analogique ou numérique de ces données (24) réalisant notamment le séquencement des moyens d'actionnement, et un bus de communication (36) vers le calculateur (10), **caractérisé en ce que** certains contacteurs internes (22) pilotés par le moyen de traitement des données (24), commandent leurs électrovannes (20) de manière partagée avec le calculateur (10) avec d'abord en amont une commande par le calculateur (10), et ensuite en aval une commande par le moyen de traitement des données (24).

2. Système de commande selon la revendication 1, **caractérisé en ce que** le module de concentration (2) comporte deux canaux similaires (4, 6) disposés en parallèle, prévus pour être reliés chacun à deux canaux similaires du calculateur (10).

3. Système de commande selon la revendication 1 ou 2, **caractérisé en ce que** les électrovannes (20) comportent un bobinage relié d'un côté au contacteur interne (22), et de l'autre côté à un contacteur (18) externe au module de concentration (2).

4. Système de commande selon l'une quelconque des revendications précédentes, **caractérisé en ce que** le module de concentration (2) comporte des contacteurs internes (26) commandant de manière indépendante certaines électrovannes (30), uniquement par le moyen de traitement des données (24).

5. Système de commande selon l'une quelconque des revendications précédentes, **caractérisé en ce que** le module de concentration (2) comporte en parallèle du bus de communication (36), une carte (38) permettant d'échanger des informations analogiques avec le calculateur à pleine autorité (10).

6. Système de commande selon l'une quelconque des revendications précédentes, **caractérisé en ce que** le module de concentration (2) comporte des moyens de surveillance (34) de signaux venant de capteurs qui ne sont pas directement liés au fonctionnement de l'inverseur de poussée.

7. Système de commande selon la revendication 6, **caractérisé en ce que** ces moyens de surveillance (34) reçoivent des signaux de température, de positionnement d'éléments de la nacelle, ou de contraintes de la structure de la nacelle.

8. Nacelle de turboréacteur pour une motorisation d'un aéronef, comportant un inverseur de poussée équipé d'un système de commande hydraulique, **caractérisé en ce que** ce système de commande est selon l'une quelconque des revendications précédentes.

## Patentansprüche

1. Hydrauliksteuerungssystem eines Schubumkehrers einer Zweistromtriebwerksgondel für ein Flugzeug, das Vorrichtungen zum Betätigen und Steuern des Umkehrers umfasst, die Hydraulikzylinder und -riegel, deren Hydraulikversorgungs-Magnetventile (20, 30), und Sensoren (16) umfassen, wobei das Triebwerk einen vollautonomen elektronischen Rechner (10) umfasst, oder wobei das Flugzeug einen Avionikrechner umfasst, der Schubumkehrbefehle gibt, wobei das System ein vom Rechner (10) getrenntes elektronisches Konzentrationsmodul (2) umfasst, das eine Konzentration der Gesamtheit der Daten ausführt, die sich auf den Betrieb der Betätigungs- und Steuervorrichtungen des Umkehrers beziehen, wobei dieses Modul interne Schütze (22, 26) zum Steuern der Magnetventile (20, 30), Mittel zum Überwachen (32) der Sensoren (16), ein Mittel zur analogen oder digitalen Verarbeitung dieser Daten (24), das vor allem die Sequenzierung der Mittel zur Betätigung ausführt, und einen Kommunikationsbus (36) zum Rechner (10) umfasst, **dadurch gekennzeichnet, dass** gewisse interne Schütze (22), die vom Mittel zur Verarbeitung der Daten (24) angesteuert werden, ihre Magnetventile (20) in geteilter Weise mit dem Rechner (10) steuern, mit zuerst stromaufwärts einem Befehl vom Rechner (10), und anschließend stromabwärts einem Befehl vom Mittel zur Verarbeitung der Daten (24).

2. Steuerungssystem nach Anspruch 1, **dadurch gekennzeichnet, dass** das Konzentrationsmodul (2) zwei parallel angeordnete, ähnliche Kanäle (4, 6) umfasst, die dafür vorgesehen sind, jeder mit zwei ähnlichen Kanälen des Rechners (10) verbunden zu werden.

3. Steuerungssystem nach Anspruch 1 oder 2, **dadurch gekennzeichnet, dass** die Magnetventile (20) eine Wicklung umfassen, die auf einer Seite mit dem internen Schütz (22), und auf der anderen Seite mit einem Schütz (18) außerhalb des Konzentrationsmoduls (2) verbunden ist.

4. Steuerungssystem nach einem der vorstehenden Ansprüche, **dadurch gekennzeichnet, dass** das Konzentrationsmodul (2) interne Schütze (26) umfasst, die gewisse Magnetventile (30) in unabhängiger Weise nur über das Mittel zur Verarbeitung der Daten (24) steuern.

5. Steuerungssystem nach einem der vorstehenden Ansprüche, **dadurch gekennzeichnet, dass** das Konzentrationsmodul (2) parallel zum Kommunikationsbus (36) eine Karte (38) umfasst, die es ermöglicht, analoge Informationen mit dem vollautonomen Rechner (10) auszutauschen.

6. Steuerungssystem nach einem der vorstehenden Ansprüche, **dadurch gekennzeichnet, dass** das Konzentrationsmodul (2) Mittel zum Überwachen (34) von Signalen umfasst, die von Sensoren stammen, welche nicht direkt mit dem Betrieb des Schubumkehrers zusammenhängen.

7. Steuerungssystem nach Anspruch 6, **dadurch gekennzeichnet, dass** diese Mittel zum Überwachen (34) Signale bezüglich Temperatur, Positionierung von Elementen der Gondel, oder Einschränkungen der Struktur der Gondel empfangen.

8. Triebwerksgondel für eine Motorisierung eines Flugzeugs, die einen Schubumkehrer umfasst, der mit einem Hydrauliksteuerungssystem ausgerüstet ist, **dadurch gekennzeichnet, dass** dieses Steuerungssystem nach einem der vorstehenden Ansprüche ist.

## Claims

1. A hydraulic control system of a thrust reverser of a bypass turbojet engine nacelle for an aircraft, comprising actuation and control devices of the thrust reverser including hydraulic cylinders and locks, their hydraulic supply solenoid valves (20, 30), and sensors (16), the turbojet engine including a full-authority electronic calculator (10) or the aircraft including an avionics calculator which gives thrust reversal orders, the system including an electronic concentration module (2) distinct from the calculator (10), carrying out a concentration of all the data related to the operation of the actuation and control devices of the thrust reverser, this module comprising internal contactors (22, 26) for controlling the solenoid valves (20, 30), means (32) for monitoring the sensors (16), means (24) for analogically or digitally processing these data carrying out in particular the sequencing of the actuation means, and a communication bus (36) to the calculator (10), **characterized in that** some internal contactors (22) piloted by the data processing means (24), control their solenoid valves (20) in a shared manner with the calculator (10), with first, upstreams, a control by the calculator (10), and then, downstreams, a control by the data processing means (24).

2. The control system according to claim 1, **characterized in that** the concentration module (2) includes two similar channels (4, 6) disposed in parallel, provided to be connected each to two similar channels of the calculator (10).

3. The control system according to claim 1 or 2, **characterized in that** the solenoid valves (20) include a winding connected, at one side, to the internal contactor (22) and, at the other side, to a contactor (18) external to the concentration module (2).

4. The control system according to any one of the preceding claims, **characterized in that** the concentration module (2) includes internal contactors (26) independently controlling some solenoid valves (30), only by the data processing means (24).

5. The control system according to any one of the preceding claims, **characterized in that** the concentration module (2) includes in parallel to the communication bus (36), a board (38) allowing exchanging analog information with the full-authority calculator (10).

6. The control system according to any one of the preceding claims, **characterized in that** the concentration module (2) includes means (34) for monitoring signals coming from sensors which do not pertain to the operation of the thrust reverser.

7. The control system according to claim 6, **characterized in that** these monitoring means (34) receive signals of temperature, of positioning of elements of the nacelle, or of stresses of the structure of the nacelle.

8. A turbojet engine nacelle for a motorization of an aircraft, including a thrust reverser equipped with a hydraulic control system, **characterized in that** this control system is according to any one of the preceding claims.
